# EUROPÄISCHE PATENTSCHRIFT

(11) **EP 1 069 148 B1**
(45) Veröffentlichungstag und Bekanntmachung des Hinweises auf die Patenterteilung: **23.08.2006**
(21) Anmeldenummer: 00111940.3
(22) Anmeldetag: 15.06.2000
(51) Int. Cl.: C08J 3/03, C09D 183/04, C04B 41/49

(54) **Wässrige, siliconhaltige Bautenschutzstoffe**
Aqueous, silicone-containing building protecting agents
Agent aqueux contenant du silicone pour protection des bâtiments

(30) Priorität: 08.07.1999 DE 19932058
(43) Veröffentlichungstag der Anmeldung: 17.01.2001
(73) Patentinhaber: Wacker Chemie AG, 81737 München (DE)
(72) Erfinder: Rautschek, Holger, Dr., 01612 Nünchritz (DE); Beuschel, Günter, 01612 Nünchritz (DE); Schmidt, Jürgen, 01612 Nünchritz (DE); Spitzner, Hartmut, Dr., 01277 Dresden (DE)
(74) Vertreter: Fritz, Helmut

(56) Entgegenhaltungen:
- EP-A- 0 908 498
- FR-A- 2 771 098
- US-A- 4 954 565
- US-A- 5 360 851
- US-A- 5 851 594

## Beschreibung

Die Erfindung betrifft wässrige, siliconhaltige Bautenschutzstoffe, insbesondere auf der Basis von Polymerdispersionen, Siliconharzemulsionen, Füllstoffen sowie bekannten Zusätzen, die als weitere Komponente eine Emulsion auf Basis eines vernetzten und/oder verzweigten Polyorganosiloxans enthalten, welches zu mehr als 80 Mol.-% aus difunktionellen Siloxaneinheiten besteht. Die Bautenschutzstoffe finden Verwendung als Anstrichstoffe oder als Putze im Innen- oder Außenbereich von Gebäuden, insbesondere dort, wo niedrige Wasseraufnahme oder Wasserabweisung gewünscht wird.

Bautenschutzstoffe, welche organische Harzdispersionen, Pigmente und andere Hilfsstoffe enthalten, sind bekannt. Werden filmbildende Anstrichstoffe formuliert, so verringern diese drastisch die Wasseraufnahme aber auch die Wasserdampfdurchlässigkeit. Das kann sich beispielsweise bei Hinterfeuchtungen oder einem hohen Feuchtegehalt des Untergrundes als sehr nachteilig erweisen. Durch Erhöhung der Pigmentvolumenkonzentration ist es möglich, die Wasserdampfdurchlässigkeit zu erhöhen, allerdings steigt dann ebenfalls die Wasseraufnahme.

Zur Verbesserung der Wasserabweisung können Anstrichstoffe und Putze neben den üblichen organischen Harzdispersionen, wie z. B. Styrol-Acrylat-Dispersionen oder Reinacrylatdispersionen, noch Alkalisiliconate, Siliconharzpulver oder Siliconharzemulsionen enthalten (DE 12 84 007). Diese Siliconharze bestehen hauptsächlich aus trifunktionellen Siloxaneinheiten. Die Vorteile dieser sogenannten Siliconharzfarben bestehen neben einer verringerten Wasseraufnahme und einer erhöhten Wasserdampfdurchlässigkeit in einer selbstreinigenden Wirkung an der Oberfläche sowie der Vermeidung der Filmbildung. Analoge Vorteile weisen sogenannte Siliconharzputze auf, die sich von den Siliconharzfarben durch einen deutlich höheren Füllstoffgehalt unterscheiden, in wesentlich dickeren Schichten aufgebracht werden und mechanisch stabile Beschichtungen des Untergrundes ergeben.

Problematisch ist die Einarbeitung des Siliconharzes bei der Herstellung der Anstrichstoffe oder Putze. Werden die Siliconharze ohne zusätzliche Emulgatoren eingemischt, ist die Verwendung von Lösemitteln unabdingbar, da eine bestimmte Viskosität nicht überstiegen werden darf (EP 546 421). Alternative dazu ist die Verwendung von Siliconharzemulsionen. DE 44 24 685 beschreibt die Verwendung einer Emulsion auf Basis von linearen Polydimethylsiloxanen mit endständigen Hydroxylgruppen zusätzlich zu der Siliconharzemulsion. Damit ist es möglich, die Menge an siliciumorganischen Verbindungen insgesamt zu verringern ohne Wasseraufnahme und Wasserdampfdurchlässigkeit zu verschlechtern.

Die nach dem Stand der Technik hergestellten siliconhaltigen Bautenschutzstoffe sind hinsichtlich ihrer Anwendungseigenschaften, wie beispielsweise Abperleffekt und Verschmutzungsneigung, nicht zufriedenstellend.

Die Aufgabe der Erfindung bestand darin, wässrige, siliconhaltige Bautenschutzstoffe bereitzustellen, die ein verbessertes Eigenschaftsprofil aufweisen, insbesondere eine niedrige Wasseraufnahme, eine hohe Wasserdampfdurchlässigkeit, einen guten Abperleffekt und eine niedrige Verschmutzungsneigung.

Gegenstand der Erfindung sind wässrige, siliconhaltige Bautenschutzstoffe, welche 0,2 bis 10 Gew-% einer Emulsion (A) auf Basis von vernetzten und/oder verzweigten Polyorganosiloxanen, welche zu mehr als 80 Mol-% aus difunktionellen Einheiten der allgemeinen Formel

R₂SiO_{2/2} (I)

bestehen,
wobei R gleiche oder verschiedene, gesättigte und/oder ungesättigte, substituierte und/oder unsubstituierte einwertige Kohlenwasserstoffreste mit 1 bis 30 Kohlenstoffatomen darstellt, enthalten.

Vorzugsweise bestehen die in den erfindungsgemäßen siliconhaltigen Bautenschutzstoffen enthaltenen verzweigten und/oder vernetzten Polyorganosiloxane aus 80 bis 99,9 Mol-% difunktionellen Einheiten der allgemeinen Formel

R₂SiO_{2/2} (I)

und 0,1 bis 20 Mol-% trifunktionellen Einheiten der allgemeinen Formel

RSiO_{3/2} (II)

und/oder tetrafunktionellen Einheiten der allgemeinen Formel

SiO_{4/2} (III),

wobei R die oben angeführte Bedeutung annimmt.

Als Reste R können zum Beispiel unsubstituierte verzweigte oder unverzweigte Alkylgruppen, wie Methyl-, Ethyl-, Propyl-, Isopropyl-, Hexyl-, Octyl-, oder Dodecylgruppen, substituierte Alkylgruppen, wie Trifluorpropyl-, Cyanoethyl-, Glycidoxypropyl-, Polyalkylenglycolpropyl-, Aminopropyl- oder Aminoethylaminopropylgruppen, ungesättigte Reste, wie Vinyl-, Methacryloxypropyl- oder Allylreste, aromatische Reste, wie Phenyl-, Toloyl-, Xylyl-, Naphtyl-, Anthracyl- oder Benzylreste, gebunden sein. Bevorzugt als Reste R sind Methyl- oder Phenylgruppen, wobei es besonders bevorzugt ist, wenn mehr als 80% der Reste R Methylgruppen sind.

Die eingesetzten verzweigten und/oder vernetzten Polyorganosiloxane weisen üblicherweise ein gewichtsmittleres Molekulargewicht größer als 50.000 g/mol und eine Molekulargewichtsverteilung (M_{w}/Mₙ) größer als 3 auf.

Die Emulsion (A) ist üblicherweise nichtionogen, weist eine volumenmittlere Teilchengröße kleiner 1 µm auf und ist vorzugsweise zu 1 bis 5 Gew.-% in den siliconhaltigen Bautenschutzstoffen enthalten. Sie besteht bevorzugt aus 1 bis 70 Gew.-% vernetzen und/oder verzweigten Polyorganosiloxanen, 0,1 bis 10 Gew.-% Emulgatoren und 20 bis 99 Gew.-% Wasser.

Die Herstellung der verzweigten und/oder vernetzten Polyorganosiloxane, die in den erfindungsgemäßen siliconhaltigen Bautenschutzstoffen eingesetzt werden, kann nach verschiedenen Verfahren erfolgen.

Eine Möglichkeit ist die Kohydrolyse von Dimethyldichlorsilan, Methyltrichlorsilan, ggf. Tetrachlorsilan, und Trimethylchlorsilan, mit der Maßgabe, dass mindestens 80 Mol-% Dimethyldichlorsilan eingesetzt werden. Anstelle der Chlorsilane können auch die entsprechenden Alkoxysilane als Ausgangstoffe dienen. Dieses Verfahren ist jedoch nicht bevorzugt.

Vorzugsweise wird bei der Herstellung der verzweigten und/oder vernetzten Polyorganosiloxane von oligomeren und/oder polymeren Diorganosiloxanen ausgegangen, die mit Silanen, welche mindestens drei hydrolysierbare oder kondensierbare Gruppen enthalten, durch chemische Umsetzung verzweigte oder vernetzte Polyorganosiloxanen bilden. Z. B. kann man die Hydrolyseprodukte von Dimethyldichlorsilan mit Trichlor- oder Trialkoxysilanen in Gegenwart von Triorganylsilylpolydimethylsiloxanen und Kondensationskatalysatoren zu verzweigten Polyorganosiloxanen umsetzen.

Eine weitere Variante zur Herstellung von verzweigten und/oder vernetzten Polyorganosiloxanen mit mehr als 80 Mol.-% difunktionellen Einheiten besteht in der radikalisch induzierten Verknüpfung von Polydiorganosiloxanketten. Das kann im einfachsten Fall durch Erhitzen des Polydiorganosiloxans in Gegenwart von Luftsauerstoff auf Temperaturen über 200 °C, besser über 250 °C erfolgen. Durch das gezielte Durchleiten von (Luft)Sauerstoff oder die Anwesenheit von Radikalinitiatoren, wie Peroxiden, kann dieser Prozess ebenso beschleunigt werden, wie durch die Anwesenheit von ungesättigten Gruppen, wie Vinylgruppen, im eingesetzten Polydiorganosiloxan.

Durch Hydrosilylierungsreaktionen sind ebenfalls die gewünschten vernetzten und/oder verzweigten Polyorganosiloxane herstellbar. Dabei werden polymere oder oligomere Siloxane mit am Silicium gebundenen Wasserstoff mit Verbindungen umgesetzt, die mindestens zwei ungesättigte Gruppen aufweisen. Je nach dem Verhältnis der reaktiven Gruppen erhält man verzweigte oder vernetzte Polymere. Bevorzugt ist es, wenn als Verbindungen mit mindestens zwei ungesättigten Gruppen ebenfalls Polyorganosiloxane eingesetzt werden. Die Hydrosilylierungsreaktion kann auch während oder nach der Emulgierung erfolgen.

Beispielsweise erfolgt die Herstellung der verzweigten und/oder vernetzten Polyorganosiloxane durch Umsetzung einer Mischung aus 90 bis 99 Gew.-% eines Polydiorgaosiloxans mit endständigen Hydroxylgruppen und einem gewichtsmittleren Molekulargewicht größer als 10.000g/mol und 1 bis 10 Gew.-% eines Organosilans mit durchschnittlich 3 bis 4 hydrolysierbaren, siliciumgebundenen Gruppen in Gegenwart eines die Kondensation beschleunigenden Katalysators. Diese Umsetzung kann auch während oder nach der Emulgierung erfolgen.

Besonders bevorzugt ist die Herstellung der Emulsion (A), indem (i) eine Mischung aus 90 bis 99 Gew.-% mindestens eines Polydiorganosiloxans mit endständigen Hydroxylgruppen und einem gewichtsmittleren Molekulargewicht größer als 10.000g/mol, bevorzugt größer als 20.000 g/mol, und 1 bis 10 Gew.-% mindestens eines Organosilans mit durchschnittlich 3 bis 4 hydrolysierbaren, siliciumgebundenen Gruppen und/oder dessen partiellen Hydrolysat mit Wasser und Emulgator zu einer Emulsion verarbeitet werden sowie (k) eine Mischung aus 90 bis 99 Gew.-% mindestens eines Polydiorganosiloxans mit endständigen Hydroxylgruppen und einem gewichtsmittleren Molekulargewicht größer 10.000 g/mol, bevorzugt größer als 20.000 g/mol, und 1 bis 10 Gew.-% eines Kondensationskatalysators mit Wasser und Emulgator zu einer Emulsion verarbeitet werden und anschließend beide erhaltene Emulsionen gemischt werden, wobei das Gew.-Verhältnis von (i) zu (k) vorzugsweise 0,01 bis 1000, besonders bevorzugt 5 bis 1000, beträgt.

Die eingesetzten Polydiorganosiloxane mit endständigen Hydroxylgruppen sind bekannt und werden üblicherweise durch Polymerisation oder Polykondensation von oligomeren cyclischen und/oder linearen Disiloxanen, wie sie z. B. bei der Hydrolyse von Dimethyldichlorsilan entstehen, erhalten.

Das Organosilan mit durchschnittlich 3 bis 4 hydrolysierbaren Gruppen entspricht bevorzugt der allgemeinen Formel

R¹ ₐSiX_{(4-a)/2} (IV),

und/oder dessem partiellen Hydrolysat, wobei R¹ gleiche und/oder verschiedene, gesättigte und/oder ungesättigte, substituierte und/oder unsubstituierte einwertige Kohlenwasserstoffreste mit 1 bis 30 Kohlenstoffatomen und X eine hydrolysierbare Gruppe, ausgewählt aus Alkenoxy-, Acetoxy-, Amino-, Amido-, Aminoxy-, Oximo- und C₁₋₄-Alkoxygruppen, bedeuten sowie a durchschnittliche Werte zwischen 3 und 4 annimmt. Silane der allgemeinen Formel (IV) sind beispielsweise Alkyl- oder Aryltrialkoxysilane, Tetraalkoxysilane, und/oder deren partielle Hydrolysate bzw. Kondensate, wie Methyltrimethoxysilan, Methyltriethoxysilan, Tetraethoxysilan, Tetrapropoxysilan, Tetrabutoxysilan, oligomeres Tetraethoxysilan mit einem SiO₂-Gehalt von 35 bis 50 Gew.-%, Vinyltrimethoxysilan, Vinyltriethoxysilan, Aminopropyltrimethoxysilan, Glycidoxypropyltrimethoxysilan, Methacroylpropyltrimethoxysilan und Phenyltrimethoxysilan.

Als Kondensationskatalysatoren können Säuren, Basen, saure oder basische Ionenaustauscher oder metallorganische Verbindungen, wie Titan- und Zirkonester, Titan- oder Zirkonchelate, Dialkylzinndicarboxylate, Zinn(II)Salze, Zinksalze oder Bleisalze, verwendet werden. Beispiele dafür sind Dibutylzinndilaurat, Zinkoctoat, monomeres oder polymeres Tetrabutyltitanat, Dibutyldiacetylacetonatotitanat, Morpholin, Triethylamin und Aluminiumacetylacetonat.

Die Herstellung der Emulsion an sich erfolgt auf bekannte Weise. Die Polyorganosiloxane, welche als Ausgangsstoffe für die vernetzten oder verzweigten Polyorganosiloxane dienen, oder die separat hergestellten verzweigten Polyorganosiloxane werden mit Emulgatoren und Wasser vermischt. Durch eine geeignet Homogenisiereinrichtung werden dabei eine homogene Teilchengrößenverteilung und eine kleine Partikelgröße erreicht. Als Emulgatoren können beim erfindungsgemäßen Verfahren alle Emulgatoren eingesetzt werden, die für die Herstellung von stabilen siliconhaltigen, wässrigen Emulsionen bekannt sind, beispielweise anionische, kationische oder nichtionogene Emulgatoren. Nichtionogene Emulgatoren, wie z. B. Polyethylenglycolether und -ester von natürlichen und/oder synthetischen Alkoholen bzw. Carbonsäuren mit 8 bis 24 Kohlenstoffatomen und von natürlichen Glyceriden, Alkylpolyglycoside, partiell oder vollständig verseiftes Polyvinylacetat, wasserlösliche Celluloseether oder deren Gemische, sind besonders bevorzugt. Der Emulgator wird bevorzugt in Mengen von 1 bis 15 Gew.-%, bezogen auf die polymere Siliciumverbindung, zugesetzt.
Der Mischvorgang erfolgt beispielsweise in einem Aggregat mit Knet- und/oder Rühreinrichtung. Die gleichzeitige Anwendung eines Rotor-Stator-Homogenisators ist vorteilhaft. Die Homogenisierung kann auch mit einem Hochdruckhomogenisator erfolgen.

Die Emulsion (A) auf Basis eines verzweigten und/oder vernetzten Polyorganosiloxans kann ebenso durch Emulsionspolymerisation von Polydiorganosiloxanen mit endständigen Hydroxylgruppen und einem gewichtsmittleren Molekulargewicht kleiner als 10.000 g/mol und/oder von cyclischen Siloxanen in Gegenwart eines oberflächenaktiven Katalysators hergestellt werden, wobei die Verzweigung oder Vernetzung durch Zugabe eines Silans der Formel (IV) zu den Siloxanen und/oder nach der Emulgierung zur Emulsion erreicht wird. Dabei werden ionische Emulgatoren bevorzugt, die gleichzeitig als Katalysatoren dienen, oder Gemische dieser Emulgatoren mit katalytisch inaktiven ionischen und/oder nichtionogenen Emulgatoren. Beispiele für saure katalytisch aktive Emulgatoren sind Alkylsulfonsäuren und Alkylbenzolsulfonsäuren wie Dodecylbenzolsulfonsäure. Diese können z. B. auch als Mischung mit ihrem Natriumsalz oder Aminsalz zur Anwendung kommen. Beispiele für basische katalytisch aktive Emulgatoren sind quaternäre Ammoniumhydroxide, wie Trimethylbenzylammoniumhydroxid.

Die erfindungsgemäßen wässrigen siliconhaltigen Bautenschutzstoffe enthalten bevorzugt:
- (a): 0,2 bis 10 Gew.-% der Emulsion (A),
- (b): 1 bis 30 Gew.-% einer wässrigen Dispersion (B) eines organischen Polymeren,
- (c): 1 bis 30 Gew.-% einer Siliconharzemulsion (C), enthaltend mindestens eine polymere Siliciumverbindung der allgemeinen Formel

R_{b}(R¹O)_{c}SiO_{(4-b-c/2)} (V),

worin R die oben angegebene Bedeutung hat, R¹ Wasserstoff und/oder einen Kohlenwasserstoffrest mit 1 bis 4 Kohlenstoffatomen bedeutet, b einen durchschnittlichen Wert zwischen 0,6 und 2,4 sowie c einen durchschnittlichen Wert zwischen 0 und 0,5 annehmen,
- (d): 30 bis 75 Gew.-% Füllstoffe und Pigmente,
- (e): 0 bis 50 Gew.-% Wasser sowie
- (f): 0,1 bis 10 Gew.-% weitere übliche Zusätze.

Die unter (e) angegebene Wassermenge ist unabhängig von den in den wässrigen Emulsionen (a) und (c) bzw. der Dispersion (b) bereits enthaltenen Wasser bei Bedarf zusätzlich zuzugeben.

Vorzugsweise enthalten die erfindungsgemäßen siliconhaltigen Bautenschutzstoffe weniger als 5 Gew.-% organische Lösemittel, besonders bevorzugt sind siliconhaltigen Bautenschutzstoffe, welche praktisch frei von organischen Lösemitteln sind.

Vorzugsweise haben die in den siliconhaltigen Bautenschutzstoffe verwendeten Emulsionen auf der Basis von verzweigten oder vernetzten Polyorganosiloxanen eine volumenmittlere Teilchengröße kleiner 1µm. Der Siloxananteil liegt zwischen 1 und 70 Gew.-%, wobei 20 bis 60 Gew.-% bevorzugt sind. Der Gehalt an Emulgatoren in der Emulsion (A) beträgt vorzugsweise zwischen 0,1 und 10 Gew.-%, wobei 1 bis 65 Gew.-% besonders bevorzugt sind.

Die Emulsion (A) auf der Basis von vernetzten und/oder verzweigten Polyorganosiloxanen sind für die erfindungsgemäßen Bautenschutzstoffe wesentlich.

Als weitere Bestandteile können die erfindungsgemäßen Bautenschutzstoffe neben der Emulsion A noch Polymerdispersionen Füllstoffe und Pigmente enthalten. Beispielsweise kann enthalten sein eine Polymerdispersion (B) auf der Basis organischer Polymere. Üblicherweise sind das bekannte, in Wasser dispergierbare oder lösliche Polymere, die vorzugsweise nach Verdunsten des Wassers Polymerfilme ergeben. Beispiele dafür sind Dispersionen, die durch radikalisch initiierte Suspensions- oder Emulsionspolymerisation von einem oder mehreren ungesättigten Monomeren erhalten wurden, wobei als Monomere Styren, Methylstyren, Acrylsäure oder deren Ester, Methacrylsäure oder deren Ester, Vinylacetat, Ethylen, Propylen, Butylen, Butadien, Vinylchlorid, Vinylbutyrat, Vinylmyristat, Maleinsäureanhydrid, Maleinsäure oder Fumarsäure, deren Ester, Halbester, Amide oder Halbamide sowie andere bekannte ungesättigte, radikalisch polymerisierbare Monomere verwendet werden können.

Füllstoffe und Pigmente sind ebenfalls ein Bestandteil der erfindungsgemäßen siliconhaltigen Bautenschutzstoffe. Bei der Verwendung der erfindungsgemäßen Bautenschutzstoffe als Fassadenfarbe ist es bevorzugt, dass der Anteil der Füllstoffe und Pigmente im Vergleich zu den eingesetzten Polymerdispersionen so gewählt wird, dass eine porenreiche Struktur des Anstrichs entsteht, die eine gute Wasserdampfdurchlässigkeit bewirkt.

Füllstoffe und Pigmente für Anstriche und Putze sind bekannt. Beispiele dafür sind Calciumcarbonat, Siliciumdioxid, Magnesiumoxid, Zinkoxid, Magnesiumcarbonat, Talkum, Titandioxid, Eisenoxide, Aluminiumoxide, natürliche Silikate und Alumosilikate sowie Schichtsilikate, wie Glimmer und Bentonite.

Vorzugsweise enthalten die siliconhaltigen Bautenschutzstoffe Siliconharzemulsionen (C) auf der Basis von polymeren Siliciumverbindungen der allgemeinen Formel (V), die vorzugsweise zu mehr 50 Mol% aus tri- oder tetrafunktionellen Einheiten aufgebaut ist. Diese werden üblicherweise durch Hydrolyse und Kondensation der entsprechenden Chlor- oder Alkoxysilane hergestellt, z. B. aus Methyltriethoxysilan sowie ggf. Dimethyldiethoxysilan. Die Herstellung derartiger Emulsionen ist bekannt.

Weitere Komponenten in den erfindungsgemäßen siliconhaltigen Bautenschutzstoffen sind weiter übliche, bekannte Zusätze, wie Verdicker auf der Basis von Bentonen oder verdickend wirkenden Polymeren, Katalysatoren, wie Amine oder Alkalimethylsilconate, Netz- und Dispergiermittel, Biocide und Entschäumer.

Verfahren zur Herstellung von Anstrichstoffen und Putzen sind bekannt, ebenso dafür geeignete Aggregate.
Die Herstellung der erfindungsgemäßen Bautenschutzmittel kann beispielsweise durch einfaches Vermischen aller Bestandteile mit einem Dissolverrührwerk erfolgen.

Die erfindungsgemäßen wässrigen, siliconhaltigen Bautenschutzstoffe sind überall dort einsetzbar, wo Gebäude vor von außen eindringender Feuchtigkeit geschützt werden sollen oder, wo aus ästhetischen Gründen Anstriche notwendig sind, vorzugsweise als Wandfarben, insbesondere als Außenanstriche oder Putze für Fassaden. Sie weisen eine niedrige Wasseraufnahme, eine hohe Wasserdampfdurchlässigkeit, einen guten Abperleffekt sowie eine niedrige Verschmutzungsneigung auf.

### Ausführungsbeispiele

### 1. Herstellung von Emulsionen mit verzweigten oder vernetzten Polyorganosiloxanen

### Emulsion 1a

Durch mit KOH katalysierte Kondensation/Equilibrierung von 100 Gew.-Teilen eines Polydiorganosiloxans mit einer gewichtsmittleren Molmasse von 5.000 g/mol und endständigen Hydroxylgruppen, 20 Gew.-Teilen eines trimethylsiloxyterminierten Polydimethylsiloxans mit einer gewichtsmittleren Molmasse von 7.400g/mol und 0,9 Gew.-Teilen Tetraethoxysilan wurde ein verzweigtes Polymethylsiloxan mit 99,1 Mol-% difunktionellen, 0,6 Mol-% monofunktionellen und 0,3 Mol-% tetrafunktionellen Siloxaneinheiten hergestellt. Dieses Polymer hatte eine Viskosität von 3.400 mPas, eine gewichtsmittlere Molmasse von 92.000 g/mol und eine breite Molekulargewichtsverteilung (M_{w}/Mₙ = 5,7). 50 Gew.-Teile dieses Polymeren wurden mit 5 Gew.-Teilen einer Emulgatormischung aus ethoxyliertem Rizinusöl und ethoxyliertem Isotridecylalkohol (HLB Wert der Mischung 14,9) und 45 Gew.-Teilen Wasser unter Verwendung eines Rotor-Stator-Homogenisators emulgiert. Die volumenmittlere Teilchengröße betrug 0,41 µm.

### Emulsion 1b

Eine Mischung aus 50 Gew.-Teilen eines Polydimethylsiloxans mit einer gewichtsmittleren Molmasse von 120.000 g/mol und endständigen Hydroxylgruppen, 0,2 Gew.-Teilen Methyltriethoxysilan und 0,1 Gew.-Teilen Dibutylzinndilaurat wurde mit 5 Gew.-Teilen einer Emulgatormischung aus ethoxyliertem Rizinusöl und ethoxyliertem Isotridecylalkohol (HLB Wert der Mischung 14,9) und 44,7 Gew.-Teilen Wasser unter Verwendung eines Rotor-Stator-Homogenisators emulgiert. Die volumenmittlere Teilchengröße betrug 0,68 µm.

### Emulsion 1c

Eine Mischung aus 50 Gew.-Teilen eines Polydimethylsiloxans mit einer gewichtsmittleren Molmasse von 120.000 g/mol und endständigen Hydroxylgruppen, 0,06 Gew.-Teilen eines oligomeren Tetraethoxysilans mit einem SiO₂-Gehalt von 40 Gew.-% und 0,1 Gew.-Teilen Dibutylzinndilaurat wurde mit 5 Gew.-Teilen einer Emulgatormischung aus ethoxyliertem Rizinusöl und ethoxyliertem Isotridecylalkohol (HLB Wert der Mischung 14,9) und 44,84 Gew.-Teilen Wasser unter Verwendung eines Rotor-Stator-Homogenisators emulgiert. Die volumenmittlere Teilchengröße betrug 0,90 µm.

### Emulsion 1d

**1d-1:** Eine Mischung aus 50 Gew.-Teilen eines Polydiorganosiloxans mit einer gewichtsmittleren Molmasse von 120.000 g/mol und endständigen Hydroxylgruppen und 1 Gew.-Teil Methyltriethoxysilan wurde mit 5 Gew.-Teilen einer Emulgatormischung aus ethoxyliertem Rizinusöl und ethoxyliertem Isotridecylalkohol (HLB Wert der Mischung 14,9) und 44 Gew.-Teilen Wasser unter Verwendung eines Rotor-Stator-Homogenisators emulgiert. Die volumenmittlere Teilchengröße betrug 0,63µm.
**1d-2:** Eine Mischung aus 50 Gew.-Teilen eines Polydiorganosiloxans mit einer gewichtsmittleren Molmasse von 120.000 g/mol und endständigen Hydroxylgruppen und 5 Gew.-Teilen Dibutylzinndilaurat wurde mit 5 Gew.-Teilen einer Emulgatormischung aus ethoxyliertem Rizinusöl und ethoxyliertem Isotridecylalkohol (HLB Wert der Mischung 14,9) und 40 Gew.-Teilen Wasser unter Verwendung eines Rotor-Stator-Homogenisators emulgiert. Die volumenmittlere Teilchengröße betrug 0,61 µm.
**1d** 99 Gew.-Teile der Emulsion 1d-1 wurden mit 1 Gew.-Teil der Emulsion 1d-2 vermischt. Die volumenmittlere Teilchengröße der so erhaltenen Emulsion 1d betrug 0,64 µm.

### Emulsion 1e

Ein verzweigtes Polymer wurde durch Umsetzung von 400 Gew.-Teilen eines Dimethylvinylterminierten Polydimethylsiloxans mit einer Molmasse von 50.000 g/mol und 2 Gew.-Teilen eines Polydimethylsiloxans mit seitenständigen Si-H Gruppen in Gegenwart von 20 ppm Platin (als Speijer Katalysator zugeben) bei 80 °C hergestellt. Das Verhältnis von Vinyl- zu Si-H-Gruppen wurde so gewählt, dass die Vinylgruppen im Überschuß waren und keine Gelierung erfolgte. 50 Gew.-Teile des so hergestellten verzweigten Polydimethylsiloxans mit einer gewichtsmittleren Molmasse von 105.000 g/mol wurden mit 5 Gew.-Teilen einer Emulgatormischung aus ethoxyliertem Rizinusöl und ethoxyliertem Isotridecylalkohol (HLB Wert der Mischung 14,9) und 45 Gew.-Teilen Wasser unter Verwendung eines Rotor-Stator-Homogenisators emulgiert. Die volumenmittlere Teilchengröße betrug 0,48 µm.

### Emulsion 1f

50 Gew.-Teile eines Gemisches aus cyclischen und linearen Polydimethylsiloxanen wurden mit 1 Gew.-Teil Dodecylbenzolsulfonsäure, 1 Gew.-Teil Dodecylbenzolsulfonsäure-Na-Salz und 48 Gew.-Teilen Wasser vermischt. Aus der groben Vormischung wurde durch dreimaliges Homogenisieren mittels eines Hochdruckhomogenisators bei 250 bar eine feinteilige stabile Emulsion mit einer volumenmittleren Teilchengröße von 0,51 µm hergestellt. Nach 24 h wurde 1 Gew.-Teil Vinyltriethoxysilan zugesetzt und nach weiteren 24 h wurde die Emulsion mit Monoethanolamin neutralisiert.

### Emulsion 1v (Vergleich)

50 Gew.-Teile eines Polydimethylsiloxans mit einer gewichtsmittleren Molmasse von 120.000 g/mol und endständigen Hydroxylgruppen wurden mit 5 Gew.-Teilen einer Emulgatormischung aus ethoxyliertem Rizinusöl und ethoxyliertem Isotridecylalkohol (HLB Wert der Mischung 14,9) und 45 Gew.-Teilen Wasser unter Verwendung eines Rotor-Stator-Homogenisators emulgiert. Die volumenmittlere Teilchengröße betrug 0,56 µm.

### 2. Anstrichstoff unterhalb der kritischen Pigmentvolumenkonzentration

### 2a (Grundfarbe, Vergleich)

Die Grundfarbe wurde durch Vermischen von 30 Gew.-% Styrol-Acrylat-Dispersion, 1,0 Gew.-% Testbenzin, 6 Gew.-% Fettsäureester, 17 Gew.-% Titandioxid, 20 Gew.-% gemahlenes Calciumcarbonat, 5 Gew.-% Talkum, 0,5 Gew.-% Entschäumer auf Mineralölbasis, 0,5 Gew.-% Carboxymethylcellulose, 0,2 Gew.-% Tetrakaliumpyrophosphat, Biocid und Wasser auf 100 Gew.-% hergestellt.

### 2b (erfindungsgemäß)

Analog 2a, aber zusätzlich enthielt die Farbe noch 3 Gew.-% der Emulsion 1b.

Die gemäß 2a und 2b hergestellten Farben wurden nach 1 Woche Lagerung auf Prüfplatten aufgetragen und einer Schnellbewitterung ausgesetzt. Anschließend wurde die Kreidung nach Kempf (Skala von 1-6) ermittelt. Die erfindungsgemäße Farbe 2b wies mit einem Kreidungsgrad von 1 eine deutlich schwächer Kreidung auf als die Farbe 2a ohne den Zusatz der Siliconemulsion 1b mit einem Kreidungsgrad von 3.

### 3. Siliconharzfarbe oberhalb der kritischen Pigmentvolumenkonzentration

### 3-0 (Grundfarbe, Vergleich)

Die Grundfarbe wurde durch Vermischen von 10 Gew.-% Styrol-Acrylat-Dispersion, 13,3 Gew.-% einer lösemittefreien Siliconharzemulsion, die 60 Gew.-% eines Polyorganosiloxans basierend auf mehr als 70 Mol.-% trifunktionellen Siloxaneinheiten enthielt, 1 Gew.-% alkoxylierte synthetische Fettsäuren (Filmbildehilfsmittel), 12,4 Gew.-% Titandioxid, 36,3 Gew.-% gemahlenes Calciumcarbonat, 2,4 Gew.-% Aluminiumsilikat, 2,9 Gew.-% Glimmer, 0,3 Gew.-% Bentonit, 0,2 Gew.-% einer 10%igen Entschäumeremulsion, 0,175 Gew.-% Polyurethanverdicker, 0,2 Gew.-% Tetrakaliumpyrophosphat, 0,05 Gew.-% Natriumpolyphosphat, 0,4 Gew.-% Ammoniumpolyacrylat, 0,75 Gew.-% Kaliummethylsiliconatlösung, Biocid und Wasser auf 100 Gew.-% hergestellt.
**3a-v** Die Farben wurden analog Grundfarbe 3-0 und unter Verwendung der nach 1. hergestellten Emulsionen hergestellt.

Diese Farben wurden auf Prüfkörper aufgetragen, durch Wasserlagerung konditioniert und anschließend die Wasseraufnahme nach EN 1062-3 und die Wasserdampfdurchlässigkeit nach DIN 52615 bestimmt. Außerdem wurde der Randwinkel zu destilliertem Wasser und die Verschmutzungsneigung ermittelt. Zur Ermittlung der Verschmutzungsneigung wurde die weiße Farbe auf Karton (z.B. Karte Byk Gardener Nr. 2853) aufgetragen und 28 Tage unter Normklima (23°C und 50% relative Luftfeuchte) konditioniert. Anschließend wurde die Probe mit einer Suspension, die 20 Gew.% Flugasche enthielt, benetzt, 2 h bei 40 °C getrocknet und mit destilliertem Wasser solange besprüht, bis keine Veränderung, d. h. keine Reinigungswirkung mehr sichtbar war. Vor dem Verschmutzen und danach wurde der Weißgrad mit einem Helligkeitsmeßgerät der Fa. Byk Gardener bestimmt. Die Verschmutzungsneigung ergibt sich aus der Differenz dieser Helligkeitswerte.

Die Prüfergebnisse sind in Tabelle 1 dargestellt:

**Tabelle 1**

| Farbe Nr. | Zusatz Emulsion Nr. | Wasseraufnahme in kg/m²h^{0,5} | Wasserdampfdurchlässigkeit in m Luftschicht | Randwinkel gegenüber Wasser | Verschmutzungsneigung |
|---|---|---|---|---|---|
| 3-0 | ohne | 0,051 | 0,057 | 106 | 3,3 |
| 3v | 1v | 0,049 | 0,066 | 108 | 5,9 |
| 3a | 1a | 0,048 | 0,078 | 115 | 1,4 |
| 3b | 1b | 0,056 | 0,091 | 112 | 1,0 |
| 3c | 1c | 0,053 | 0,101 | 116 | 1,8 |
| 3d | 1d | 0,062 | 0,061 | 115 | 2,1 |
| 3e | 1e | 0,039 | 0,058 | 110 | 3,0 |
| 3f | 1f | 0,045 | 0,083 | 117 | 1,9 |

Die erfindungsgemäßen Farben zeigten einen deutlich höheren Randwinkel zu Wasser, verbunden mit einer geringeren Verschmutzungsneigung, verglichen mit Farben ohne Zusätzen oder nach dem Stand der Technik (3v). Die Wasseraufnahme und die Wasserdampfdurchlässigkeit blieben auf einem sehr guten Niveau.

### 4. Kunstharzputz

Ein Kunstharzputz wurde wie folgt formuliert: 5 Gew.-Teile Wasser, 20 Gew.-Teile Natriumpolyphosphat, 30 Gew.-Teile Methylhydroxethylcellulose, 1 Gew.-Teil 2%ige Natronlauge, 40 Gew.-Teile Titandioxidpigment, 11 Gew.-Teile Aluminiumoxid, 40 Gew.-Teile Magnesium-Aluminiumsilikat, 5 Gew.-Teile Cellulosefasern, 683 Gew.-Teile Calciumcarbonat (Mischung aus verschiedenen Körnungen), 70 Gew.-Teile Vinylacetatdispersion, sowie je 1 Gew.-Teil Konservierungsmittel und Entschäumer wurden gemeinsam mit 50 Gew.-Teilen der Emulsion nach Beispiel 1d homogen gemischt. Es wurde ein Kunstharzputz erhalten, der eine sehr gute Wasserabweisung und eine geringen Verschmutzungsneigung aufwies.

## Patentansprüche

1. Wässrige, siliconhaltige Bautenschutzstoffe, enthaltend 0,2 bis 10 Gew-% einer Emulsion (A) auf Basis von vernetzten und/oder verzweigten Polyorganosiloxanen, welche zu mehr als 80 Mol-% aus difunktionellen Einheiten der allgemeinen Formel
R₂SiO_{2/2} (I)
bestehen, wobei R gleiche oder verschiedene, gesättigte und/oder ungesättigte, substituierte und/oder unsubstituierte einwertige Kohlenwasserstoffreste mit 1 bis 30 Kohlenstoffatomen darstellt.

2. Wässrige, siliconhaltige Bautenschutzstoffe nach Anspruch 1, **dadurch gekennzeichnet, dass** die verzweigten und/oder vernetzten Polyorganosiloxane aus 80 bis 99,9 Mol-% difunktionellen Einheiten der allgemeinen Formel
R₂SiO_{2/2} (I)
und 0,1 bis 20 Mol-% trifunktionellen Einheiten der allgemeinen Formel
RSiO_{3/2} (II)
und/oder tetrafunktionellen Einheiten der allgemeinen Formel
SiO_{4/2} (III)
bestehen, wobei R die oben angeführte Bedeutung annimmt.

3. Wässrige, siliconhaltige Bautenschutzstoffe nach Anspruch 1, **dadurch gekennzeichnet, dass** die verzweigten und/oder vernetzten Polyorganosiloxane ein gewichtsmittleres Molekulargewicht größer als 50.000 g/mol und eine Molekulargewichtsverteilung (M_{w}/Mₙ) größer als 3 aufweisen.

4. Wässrige, siliconhaltige Bautenschutzstoffe nach Anspruch 1, **dadurch gekennzeichnet, dass** 1 bis 5 Gew.-% der Emulsion (A) enthalten sind.

5. Wässrige, siliconhaltige Bautenschutzstoffe nach Anspruch 1, **dadurch gekennzeichnet, dass** die Emulsion (A) nichtionogen ist und eine volumenmittlere Teilchengröße kleiner 1 µm aufweist.

6. Wässrige, siliconhaltige Bautenschutzstoffe nach Anspruch 1, **dadurch gekennzeichnet, dass** die Emulsion (A) aus 1 bis 70 Gew.-% vernetzten und/oder verzweigten Polyorganosiloxanen, 0,1 bis 10 Gew.-% Emulgatoren und 20 bis 99 Gew.-% Wasser besteht.

7. Wässrige, siliconhaltige Bautenschutzstoffe nach Anspruch 1, **dadurch gekennzeichnet, dass** die Emulsion (A),hergestellt wird, indem
(i) eine Mischung aus 90 bis 99 Gew.-% mindestens eines Polydiorganosiloxans mit endständigen Hydroxylgruppen und einem gewichtsmittleren Molekulargewicht größer 10.000 g/mol und 1 bis 10 Gew.-% mindestens eines Organosilans mit durchschnittlich 3 bis 4 hydrolysierbaren, siliciumgebundenen Gruppen und/oder dessen partiellen Hydrolysat mit Wasser und Emulgator zu einer Emulsion verarbeitet werden sowie
(k) eine Mischung aus 90 bis 99 Gew.-% mindestens eines Polydiorganosiloxans mit endständigen Hydroxylgruppen und einem gewichtsmittleren Molekulargewicht größer 10.000 g/mol und 1 bis 10 Gew.-% eines Kondensationskatalysators mit Wasser und Emulgator zu einer Emulsion verarbeitet werden und anschließend beide erhaltene Emulsionen gemischt werden.

8. Wässrige, siliconhaltige Bautenschutzstoffe nach Anspruch 7, **dadurch gekennzeichnet, dass** das Polydiorganosiloxan mit endständigen Hydroxylgruppen ein gewichtsmittleres Molekulargewicht größer als 20.000 g/mol aufweist.

9. Wässrige, siliconhaltige Bautenschutzstoffe nach Anspruch 7, **dadurch gekennzeichnet, dass** das zur Herstellung von (i) eingesetzte Organosilan der allgemeinen Formel
R¹ ₐSiX_{(4-a)/2} (IV),
und/oder dessen partiellem Hydrolysat entspricht, wobei R¹ gleiche und/oder verschiedene, gesättigte und/oder ungesättigte, substituierte und/oder unsubstituierte einwertige Kohlenwasserstoffreste mit 1 bis 30 Kohlenstoffatomen und X eine hydrolysierbare Gruppe, ausgewählt aus Alkenoxy-, Acetoxy-, Amino-, Amido-, Oximo- und C₁₋₄-Alkoxygruppen, bedeuten sowie a durchschnittliche Werte zwischen 0 und 1,8 annimmt.

10. Wässrige, siliconhaltige Bautenschutzstoffe nach Anspruch 1, enthaltend
(a) 0,2 bis 10 Gew.-% der Emulsion (A),
(b) 1 bis 30 Gew.-% einer wässrigen Dispersion (B) auf Basis eines organischen Polymeren,
(c) 1 bis 30 Gew.-% einer wässrigen Siliconharzemulsion (C), auf Basis mindestens einer polymere Siliciumverbindung der allgemeinen Formel
R_{b}(R¹O)_{c}SiO_{(4-b-c/2)} (V),
die zu mehr als 50 Mol% aus tri- oder tetrafunktionellen Einheiten aufgebaut ist,
worin R die oben angegebene Bedeutung hat, R¹ Wasserstoff und/oder einen Kohlenwasserstoffrest mit 1 bis 4 Kohlenstoffatomen bedeutet, b einen durchschnittlichen Wert zwischen 0,6 und 2,4 sowie c einen durchschnittlichen Wert zwischen 0 und 0,5 annehmen
(d) 30 bis 75 Gew.-% Füllstoffe und Pigmente,
(e) 0 bis 50 Gew.-% Wasser.

11. Verwendung der wässrigen, siliconhaltigen Bautenschutzstoffe nach Anspruch 1 als Anstrichstoffe oder Putze.

## Claims

1. Aqueous, silicone-containing architectural preservatives, comprising from 0.2 to 10% by weight of an emulsion (A) based on crosslinked and/or branched polyorganosiloxanes composed of more than 80 mol% of bifunctional units of the general formula
R₂SiO_{2/2} (I),
where R is identical or different, saturated and/or unsaturated, substituted and/or unsubstituted monovalent hydrocarbon radicals having from 1 to 30 carbon atoms.

2. Aqueous, silicone-containing architectural preservatives according to Claim 1, **characterized in that** the branched and/or crosslinked polyorganosiloxanes are composed of from 80 to 99.9 mol% of bifunctional units of the general formula
R₂SiO_{2/2} (I),
and from 0.1 to 20 mol% of trifunctional units of the general formula
R₂SiO_{3/2} (II)
and/or tetrafunctional units of the general formula
R₂SiO_{4/2} (III),
where R is as defined above.

3. Aqueous, silicone-containing architectural preservatives according to Claim 1, **characterized in that** the branched and/or crosslinked polyorganosiloxanes have a weight-average molar mass greater than 50 000 g/mol and a polydispersity (M_{w}/Mₙ) greater than 3.

4. Aqueous, silicone-containing architectural preservatives according to Claim 1, **characterized in that** from 1 to 5% by weight of the emulsion (A) is/are present.

5. Aqueous, silicone-containing architectural preservatives according to Claim 1, **characterized in that** the emulsion (A) is non-ionogenic and has a volume-average particle size of less than 1 µm.

6. Aqueous, silicone-containing architectural preservatives according to Claim 1, **characterized in that** the emulsion (A) is composed of from 1 to 70% by weight of crosslinked and/or branched polyorganosiloxanes, of from 0.1 to 10% by weight of emulsifiers and of from 20 to 99% by weight of water.

7. Aqueous, silicone-containing architectural preservatives according to Claim 1, **characterized in that** the emulsion (A) is prepared by
(i) processing a mixture of from 90 to 99% by weight of at least one polydiorganosiloxane having terminal hydroxy groups and a weight-average molar mass greater than 10 000 g/mol and from 1 to 10% by weight of at least one organosilane having an average of from 3 to 4 hydrolysable, silicon-bonded groups, and/or its partial hydrolysate with water and emulsifier to give an emulsion and
(k) processing a mixture of from 90 to 99% by weight of at least one polydiorganosiloxane having terminal hydroxy groups and a weight-average molar mass greater than 10 000 g/mol and from 1 to 10% by weight of a condensation catalyst with water and emulsifier to give an emulsion and then mixing both of the resultant emulsions.

8. Aqueous, silicone-containing architectural preservatives according to Claim 7, **characterized in that** the polydiorganosiloxane having terminal hydroxy groups has a weight-average molar mass greater than 20 000 g/mol.

9. Aqueous, silicone-containing architectural preservatives according to Claim 7, **characterized in that** the organosilane used in preparing (i) has the general formula
R¹ ₐSiX_{(4-a)/2} (IV),
and/or is its partial hydrolysate, where R¹ is identical and/or different, saturated and/or unsaturated, substituted and/or unsubstituted monovalent hydrocarbon radicals having from 1 to 30 carbon atoms and X is a hydrolysable group, selected from alkenoxy, acetoxy, amino, amido, oximo and C₁₋₄-alkoxy groups, and a assumes average values from 0 to 1.8.

10. Aqueous, silicone-containing architectural preservatives according to Claim 1, comprising
(a) from 0.2 to 10% by weight of the emulsion (A),
(b) from 1 to 30% by weight of an aqueous dispersion (B) based on an organic polymer,
(c) from 1 to 30% by weight of an aqueous silicone resin emulsion (C), based on at least one polymeric silicon compound of the general formula
R_{b}(R¹O)_{c}SiO_{(4-b-c/2)} (V)
which is composed of more than 50 mol% of tri- or tetrafunctional units,
where R is as defined above, R¹ is hydrogen and/or a hydrocarbon radical having from 1 to 4 carbon atoms, b assumes an average value of from 0.6 to 2.4, and c assumes an average value of from 0 to 0.5,
(d) from 30 to 75% by weight of fillers and pigments,
(e) from 0 to 50% by weight of water.

11. Use of the aqueous, silicone-containing architectural preservatives according to Claim 1 as paints or renders.

## Revendications

1. Agents aqueux contenant du silicone pour la protection des bâtiments, contenant de 0,2 à 10% en poids d'une émulsion (A) à base de polyorganosiloxanes réticulés et/ou ramifiés, qui consistent à plus de 80% molaires en unités difonctionnelles de la formule générale
R₂SiO_{2/2} (I),
dans laquelle les R sont identiques ou différents et représentent des restes hydrocarbonés monovalents saturés et/ou insaturés, substitués et/ou non substitués, comportant de 1 à 30 atomes de carbone.

2. Agents aqueux contenant du silicone pour la protection des bâtiments selon la revendication 1, **caractérisés en ce que** les polyorganosiloxanes ramifiés et/ou réticulés sont constitués de 80 à 99,9% molaires d'unités difonctionnelles de la formule générale
R₂SiO_{2/2} (I),
et de 0,1 à 20% molaires d'unités trifonctionnelles de la formule générale
RSiO_{3/2} (II),
et/ou d'unités tétrafonctionnelles de la formule générale
SiO_{4/2} (III),
où R adopte la signification indiquée plus haut.

3. Agents aqueux contenant du silicone pour la protection des bâtiments selon la revendication 1, **caractérisés en ce que** les polyorganosiloxanes ramifiés et/ou réticulés présentent une moyenne pondérale de poids moléculaire supérieure à 50.000 g/mole et une distribution de poids moléculaire (M_{w}/Mₙ) supérieure à 3.

4. Agents aqueux contenant du silicone pour la protection des bâtiments selon la revendication 1, **caractérisés en ce que** de 1 à 5% en poids de l'émulsion (A) y sont contenus.

5. Agents aqueux contenant du silicone pour la protection des bâtiments selon la revendication 1, **caractérisés en ce que** l'émulsion (A) est non ionogène et présente une moyenne volumique de taille de particules de moins de 1 µm.

6. Agents aqueux contenant du silicone pour la protection des bâtiments selon la revendication 1, **caractérisés en ce que** l'émulsion (A) est constituée de 1 à 70% en poids de polyorganosiloxanes réticulés et/ou ramifiés, de 0,1 à 10% en poids d'émulsifiants et de 20 à 99% en poids d'eau.

7. Agents aqueux contenant du silicone pour la protection des bâtiments selon la revendication 1, **caractérisés en ce que** l'émulsion (A) est préparée comme suit:
(i) un mélange constitué de 90 à 99% en poids d'au moins un polydiorganosiloxane ayant des groupes hydroxyle terminaux et une moyenne pondérale de poids moléculaire supérieure à 10.000 g/mole et de 1 à 10% en poids d'au moins un organosilane ayant en moyenne de 3 à 4 groupes hydrolysables à liaison silicium et/ou de son produit partiellement hydrolysé, est travaillé avec de l'eau et un émulsifiant de manière à donner une émulsion, et
(k) un mélange constitué de 90 à 99% en poids d'au moins un polydiorganosiloxane ayant des groupes hydroxyle terminaux et une moyenne pondérale de poids moléculaire supérieure à 10.000 g/mole et de 1 à 10% en poids d'un catalyseur de condensation est travaillé avec de l'eau et un émulsifiant de manière à donner une émulsion,
et l'on mélange ensuite les deux émulsions obtenues.

8. Agents aqueux contenant du silicone pour la protection des bâtiments selon la revendication 7, **caractérisés en ce que** le polydiorganosiloxane à groupes hydroxyle terminaux présente une moyenne pondérale de poids moléculaire supérieure à 20.000 g/mole.

9. Agents aqueux contenant du silicone pour la protection des bâtiments selon la revendication 7, **caractérisés en ce que** l'organosilane mis en oeuvre pour la préparation de (i) correspond à la formule générale
R¹ ₐSiX_{(4-a)/2} (IV)
et/ou son hydrolysat partiel, où les R¹ sont identiques et/ou différents et représentent des restes hydrocarbonés monovalents saturés et/ou insaturés, substitués et/ou non substitués, comportant de 1 à 30 atomes de carbone, et X représente un groupe hydrolysable, choisi parmi des groupes alcénoxy, acétoxy, amino, amido, oximo et alcoxy en C₁-C₄, et a prend des valeurs moyennes entre 0 et 1,8.

10. Agents aqueux contenant du silicone pour la protection des bâtiments selon la revendication 1, contenant
(a) de 0,2 à 10% en poids de l'émulsion (A),
(b) de 1 à 30% en poids d'une dispersion aqueuse (B) à base d'un polymère organique,
(c) de 1 à 30% en poids d'une émulsion aqueuse de résine siliconée (C), à base d'au moins un composé polymère de silicium de la formule générale
R_{b}(R¹O)_{c}SiO_{(4-b-c/2)} (V),
constitué à plus de 50% molaire d'unités tri- ou tétrafonctionnelles,
où R a la signification indiquée ci-avant, R¹ représente de l'hydrogène et/ou un reste hydrocarboné comportant de 1 à 4 atomes de carbone, b a une valeur moyenne entre 0,6 et 2,4 et c a une valeur moyenne entre 0 et 0,5,
(d) de 30 à 75% en poids de matières de remplissage et de pigments,
(e) de 0 à 50% en poids d'eau.

11. Utilisation des agents aqueux contenant du silicone pour la protection des bâtiments selon la revendication 1 comme enduits ou crépis.
